# FASCICULE DE BREVET EUROPEEN

(11) **EP 0 711 791 B1**
(45) Date de publication et mention de la délivrance du brevet: **20.01.1999**
(21) Numéro de dépôt: 95402352.9
(22) Date de dépôt: 23.10.1995
(51) Int. Cl.: C08F 283/02, C08L 27/00, C08L 51/08, C08F 8/30, C08F 8/32

(54) **Mélanges de polymères comprenant un polymère halogéné et compatibilisés par un polyester aliphatique greffé**
Polymeremischungen enthaltend ein halogeniertes Polymer und einen zur Kompatibilität gepfropften aliphatischen Polyester
Blends of polymers containing a halogenated polymer compatibilized with a graft aliphatic polyester

(30) Priorité: 08.11.1994 FR 9413368
(43) Date de publication de la demande: 15.05.1996
(73) Titulaire: ELF ATOCHEM S.A., 92800 Puteaux, Hauts de Seine (FR)
(72) Inventeur: Breant, Patrice, F-27470 Serquigny (FR); Bouilloux, Alain, F-27300 Bernay (FR)
(74) Mandataire: Neel, Henry

(56) Documents cités:
- US-A- 3 825 622
- US-A- 3 855 357
- US-A- 3 884 994
- PATENT ABSTRACTS OF JAPAN vol. 15 no. 197 (C-833) ,21 Mai 1991 & JP-A-03 052952 (DAICEL CHEM IND. LTD.) 7 Mars 1991,
- DATABASE WPI Section Ch, Week 9313 Derwent Publications Ltd., London, GB; Class C08, AN 93-104338 'polycaprolactone graft polyepoxide modified copolymer compatible polymer blend ...' & JP-A-05 043 653 (DAICEL CHEM. IND.) , 23 Février 1993

## Description

L'invention concerne des mélanges de polymères comprenant un polymère halogéné et compatibilisés par un polyester aliphatique greffé.

Elle concerne aussi certains polyesters aliphatiques greffés et leur procédé de préparation.

TEYSSIE et coll. décrivent des copolymères blocs de polystyrène et de polycaprolactone permettant la compatibilisation de mélanges de polystyrène et de polychlorure de vinyle ( HEUSCHEN et TEYSSIE: POLYMER Vol 31 August pp 1473 à 1480 (1990)).

CHUNG et coll. décrivent des polypropylènes greffés polycaprolactone par copolymérisation de type Ziegler de propylène et de derivés de borane portant des fonctions insaturées: ces copolymères réagissent ensuite , après hydrolyse, par voie anionique avec l'ε-polycaprolactone pour conduire à des produits qui sont des compatibilisants effectifs de mélanges de polypropylène et de polycarbonate ou de polychlorure de vinyle (CHUNG : Macromolécules Vol 27 pp 1313 à 1319(1994)).

Le brevet japonais de DAICEL (JP 03052952 A publié le 7 Mars 1991) décrit la synthèse de copolymère de styrène, d'anhydride maléique et de dérivés insaturés modifiés par de la caprolactone en solution et leur utilisation comme compatibilisants de mélanges de polyamide et de polychlorure de vinyle ou de polyester.

Ces différentes voies de synthèse sont généralement longues et délicates donc coûteuses.

Le brevet japonais de TOYOBO (JP 03188160 a publié le 16 août 1991) décrit l'utilisation d'ε-polycaprolactone greffée par de l'anhydride maléique à l'état fondu comme compatibilisant de mélanges de polycarbonate ou polyester avec du polyamide.

On a maintenant découvert que des polyesters aliphatiques modifiés pouvaient compatibiliser des mélanges de polymères comprenant un polymère halogéné.

La présente invention concerne des mélanges comprenant
- un polymère halogéné,
- un autre polymère choisi parmi l'EVOH, le PBT, le PET, le PS ou le PA.
- un compatibilisant constitué d'un polyester aliphatique sur lequel on a greffé au moins un monomère choisi parmi :
- les acides carboxyliques insaturés, leurs sels, leurs esters, leurs anhydrides ;
- les produits insaturés portant des fonctions époxydées ;
- les esters vinyliques ;
- le styrène et ses dérivés..
la quantité de monomère greffé étant inférieure à 15% en poids du polyester aliphatique.

A titre d'exemple de polymère halogéné, on peut citer le PVC, le PVC surchloré, le PVC plastifié, les compounds à base de PVC, le PVDF et ses copolymères ou le PVF3 (polytrifluoréthylène).

Le polyester aliphatique greffé compatibilise un polymère halogèné avec un autre polymère qui est peu ou pas compatible avec lui et choisi parmi les copolymères éthylène-alcool vinylique (EVOH), les polyesters tels que le polyéthylène téréphtalate (PET) ou le polybutylène téréphtalate (PBT), le polystyrène (PS) et les polyamides (PA).

Le polyester aliphatique peut être choisi parmi les polylactones telles que la polycaprolactone (PCL) et la polypivalolactone ou la polyenantholactone ou le polycaprilolactone.

A titre d'exemple, de monomère greffé on peut citer:
- l'acide (méth)acrylique, l'acide fumarique, l'acide mésaconique ;
- les (méth)acrylates d'alkyles tels que le méthacrylate de méthyle, l'acrylate de butyle, l'acrylate de tertiobutyle ou l'acrylate d'hydroxyéthyle;
- l'anhydride citraconique, l'anhydride itaconique, l'anhydride tétrahydrophtalique, l'anhydride méthyl-2 maléique, l'anhydride diméthyl-2,3 maléique et l'anhydride maléique ;
- les esters et les éthers de glycidyle aliphatiques tels que, le (méth)acrylate de glycidyle, le maléate de glycidyle, l'itaconate de glycidyle, le vinylglycidyléther, l'alkylglycidyléther.

On peut citer aussi les esters et les éthers de glycidyle alicycliques tels que le 2-cyclohexène-1-glycidyléther, le cyclohexène-4,5-diglycidylcarboxylate, le cyclohexène-4-glycidyl carboxylate, le 5-norbornène-2-méthyl-2-glycidyl carboxylate et l'endocis-bicyclo (2,2,1)-5-heptène-2, diglycidyl dicarboxylate, le vinylcyclohexène monoxyde, le METHB ;
- l'acétate de vinyle.

Le greffage peut s'effectuer en extrudeuse à l'état fondu en présence d'initiateurs radicalaires.

Il est bien connu que les polyesters aliphatiques et en particulier la polycaprolactone est sensible à l'attaque de radicaux initiés par décomposition thermique d'initiateurs appropriés comme des peroxydes. En l'absence de tout autre réactif, cette attaque radicalaire conduit à la modification de l'architecture moléculaire du produit de départ par branchement les unes avec les autres des chaines du polymère: cette modification est appelée branchement long et, si la quantité de radicaux produits est suffisante, elle conduit à la réticulation du polymère.

De plus, les polyesters aliphatiques tels que les polylactones, obtenus généralement par des réactions de polycondensation, présentent des chaines moléculaires linéaires et, de ce fait, au delà du point de fusion de leurs zones cristallines, une viscosité de fusion très faible, généralement incompatible avec une bonne manipulabilité du produit en sortie, par exemple, d'une extrudeuse. De plus, cette faible viscosité de fusion peut être préjudiciable à une bonne compatibilité ou une bonne miscibilité de ce produit même avec des polymères réputés miscibles ou compatibles et, de ce fait, être préjudiciable à l'action de compatibilisation désirée des mélanges de polymères. Le greffage à l'état fondu, en extrudeuse, par l'intermédiaire d'initiateurs radicalaire, permet, du fait des réactions de branchement parallèles à la réaction de greffage, d'augmenter considérablement la viscosité du polymère et de la rendre plus apte au mélangeage ultérieur.

Par exemple, le greffage à l'état fondu, en extrudeuse, de l'ε-polycaprolactone, se déroule typiquement dans les conditions suivantes:

L'extrudeuse, de type WERNER 30 utilisée est une extrudeuse bi-vis corotative présentant un profil de températures comme décrit dans le tableau ci-dessous:

| **Zone d'introduction de la PCL** | **Zone d'injection des réactifs** | **ZONES DE REACTION** | | **Zone de dégazage** | | **Filière de sortie** |
|---|---|---|---|---|---|---|
| 20°C | 120°C | 210°C | 210°C | 220°C | 220°C | 220°C |

La zone d'introduction de la polycaprolactone est maintenue basse ( 20°C ) du fait du bas point de fusion du produit ( 60°C ) afin d'éviter des bouchages à la goulotte d'alimentation et un bon transport du produit.

La vitesse de vis est typiquement de 200 tours/minutes pour un débit d'extrusion d'environ 10kg/h.

Les produits volatils de la réaction sont éliminés en zone de dégazage sous un vide maximum.

La température des zones de réaction est adaptée à l'initiateur radicalaire utilisé et au temps de séjour des réactifs de telle façon que tout l'initiateur radicalaire se soit décomposé au moins à 99.9%. Elles sont typiquement de 210°C pour des initiateurs comme le DHBP ( 2,5-diméthyl 2,5(ditertiobutylperoxy)hexane ) ou le DICUP ( peroxyde de dicumyle ), de 190°C pour le TMCH ( 1,1-di(terbutylperoxy)-3,3,5-triméthylcyclohexane ) ou de 175°C pour le peroxyde de benzoyle.

Pour greffer les polyesters aliphatiques, les initiateurs radicalaires utilisables sont nombreux, on peut citer, par exemple, les peroxydes de diacyles, les peroxydes dérivés de composés cétoniques, les peroxydicarbonates, les peroxyesters, les peroxydes de dialkyles, les peroxydes de dérivés organosulfonyles, les peroxycétales.

L'initiateur radicalaire est usuellement dilué dans un solvant (par exemple le trichlorobenzène) mais il peut être utilisé tel que s'il est liquide (par exemple le DHBP). Il est généralement injecté par l'intermédiaire d'une pompe doseuse dans le polyester aliphatique fondu à une température suffisamment basse pour que l'initiateur puisse se mélanger convenablement dans la masse fondue avant de commencer à se décomposer et à réagir. Il peut également être introduit en mélange avec une poudre d'un polymère approprié au même endroit que les granulés du polyester aliphatique par l'intermédiaire d'un doseur approprié.

Les monomères sont généralement injectés dans la masse fondue par l'intermédiaire d'une pompe doseuse, s'ils sont liquides, dans la même zone d'injection que celle de l'initiateur radicalaire. Pour plus de convenance, parfois, le monomère peut servir de solvant à l'initiateur radicalaire.

Lorsque les monomères sont sous forme solide, ils sont généralement introduits au même endroit que les granulés de polyester aliphatique par l'intermédiaire d'un doseur approprié.

Certains de ces polyesters aliphatiques greffés sont nouveaux, en particulier, ceux greffés par les produits insaturés portant des fonctions epoxydées.

La présente invention concerne aussi des polyesters aliphatiques greffés présentant les enchaînements suivants : 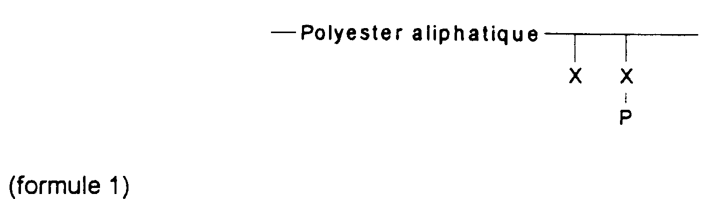
- (formule 1) X est un motif dérivé d'un monomère pouvant être greffé radicalairement sur un polyester aliphatique et possédant une fonction pouvant réagir avec un motif amine,
- P dérive d'un polyamide de formule : 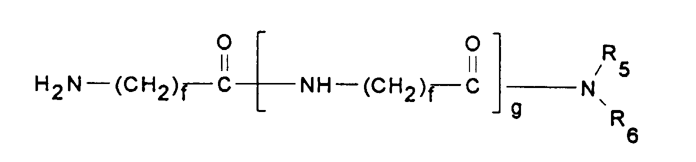 dans laquelle :
- f est un nombre compris entre 3 et 11,
- g représente le degré de polymérisation. On peut utiliser des polyamides ou des oligomères de polyamide.
- R₅ est l'hydrogène ou un groupement alkyle linéaire ou ramifié contenant jusqu'à 20 atomes de carbone,
- R₆ est un groupement ayant jusqu'à 20 atomes de carbone alkyle ou alcényle linéaire ou ramifié, un radical cycloaliphatique, saturé ou non, un radical aromatique ou une combinaison des précédents.

Il est bien clair que X représente soit le reste du monomère greffé, soit le reste du monomère greffé qui a ensuite réagi avec le polyamide ou l'oligomère du polyamide P. Tout ou partie des monomères X peut être utilisée pour greffer des motifs P.

La quantité totale de monomère et de polyamide greffé est en général inférieure à 15 % en poids de la quantité de polyester aliphatique.

Le monomère X peut être choisi parmi les acides carboxyliques insaturés et les anhydrides d'acides carboxyliques insaturés. Des exemples de ces produits ont été cités précédemment. On utilise avantageusement l'anhydride maléique. Le greffage de X s'effectue comme précédemment. On ajoute ensuite le polyamide P.

Par exemple, si le polyester aliphatique est la PCL et si X est l'anhydride maléique et P un oligomère de Polyamide 6, on désignera le compatibilisant dans la suite du texte par PCI greffée oligomère PA6.

Ce polyamide mono aminé peut être obtenu par polycondensation d'un amino-acide de formule : 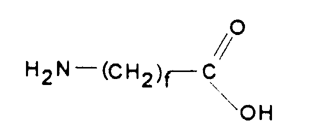 ou par polyaddition d'un lactame de formule : 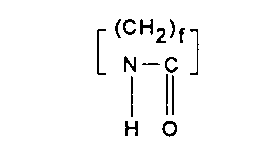 dans lesquelles f a la signification donnée précédemment, en présence d'un limitateur monofonctionnel de polymérisation de formule : 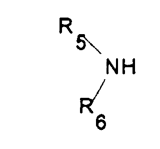 dans laquelle R₅ et R₆ ont la signification donnée précédemment.

Les monomères amino-acides ou lactames préférés pour la synthèse du polyamide monoaminé selon l'invention sont choisis parmi le caprolactame, l'acide amino-11-undécanoïque ou le dodécalactame.

Les limitateurs monofonctionnels de polymérisation préférés sont la laurylamine et l'oléylamine.

La polycondensation définie ci-dessus s'effectue selon les procédés habituellement connus, par exemple à une température comprise en général entre 200 et 300° C, sous vide ou sous atmosphère inerte, avec agitation du mélange réactionnel.

La longueur de chaîne moyenne est déterminée par le rapport molaire initial entre le monomère polycondensable ou le lactame et le limitateur monofonctionnel de polymérisation.

Pour le calcul de la longueur de chaîne moyenne, on compte habituellement une molécule de limitateur de chaîne pour une chaîne d'oligomère.

L'addition du polyamide monoaminé sur le polyester aliphatique greffé avec un monomère X s'effectue par réaction d'une fonction amine du polyamide avec au moins une fonction anhydride ou acide du polyester greffé. On crée ainsi des liaisons amides ou imides.

On réalise l'addition de P sur le polyester aliphatique greffé, de préférence à l'état fondu. On peut aussi, dans une extrudeuse, malaxer le polyamide et le polyester aliphatique greffé à une température généralement comprise entre 230 et 250 ° C. Le temps de séjour moyen de la matière fondue dans l'extrudeuse peut être compris entre 10 s et 3 minutes et de préférence entre 1 et 2 minutes.La présente invention concerne aussi des mélanges de polymères comprenant au moins un polymère halogéné et compatibilisés par des polyesters aliphatiques greffés (i) par un monomère possédant une fonction pouvant réagir avec un motif amine et étant de préférence un acide carboxylique insaturé ou un anhydride d'acide carboxylique insaturé et (ii) par des polyamides monoaminés qui ont réagi avec tout ou partie des monomères précédents.

Les polymères halogénés et les autres polymères à compatibiliser sont ceux déjà cités précédemment.

Les mélanges de l'invention peuvent être des mélanges de PVC et d'EVOH.

Le polychlorure de vinyle est utilisé en grand volume dans la confection des bouteilles d'eaux minérales plates. Du fait de sa perméabilité aux gaz moyenne, il est peu utilisé pour les eaux minérales gazeuses si ce n'est pour des bouteilles d'épaisseur supérieure à la normale. L'EVOH est un polymère bien connu pour sa haute imperméabilité aux gaz. Il est donc intéressant de produire des mélanges de PVC et d'EVOH en faible quantité afin d'améliorer la perméabilité aux gaz du PVC. Les deux polymères étant incompatibles, il est nécessaire d'utiliser un tiers composant pour obtenir un mélange compatibilisé ayant de bonnes propriétés.

Le brevet FR 2634489 décrit l'utilisation de polyesteramides pour compabiliser le mélange des deux polymères. Les polyesteramides décrits ont une partie ester qui dérive de mélanges d'acides téréphtalique et d'acide adipique avec du 1,4 butanediol et une partie amide qui dérive du caprolactame.

Le brevet WO 91/09084 décrit l'utilisation de PVC greffé par des monomères acryliques ou des polyurethannes ou des dérivés insaturés d'acides carboxyliques ou l'utilisation de polyuréthannes pour compatibiliser le mélange PVC/EVOH.

On a découvert que les polyesters aliphatiques modifiés par greffage, de préférence par des anhydrides d'acides carboxyliques insaturés, permettait d'obtenir un mélange de PVC et d'EVOH avec de bonnes propriétés.

La proportion d'EVOH peut être par exemple jusqu'à 20 % en poids du mélange EVOH - PVC.

La quantité de compatibilisant est de 1 à 10 % en poids du mélange EVOH / PVC et de préférence 2 à 5 %.

Les mélanges de l'invention peuvent aussi être des mélanges PVC / PET.

Le recyclage du PVC des bouteilles d'eau minérale demande une collecte préalable des bouteilles chez les particuliers ou dans les collectivités. Ce PVC se trouve toujours mélangé avec du PET provenant soit des bouteilles d'eau minérale gazeuse soit des jus de fruit. Ce mélange est rhédibitoire à un bon recyclage du PVC du fait des hautes températures nécessaires au travail en extrudeuse du PET, températures entrainant la dégradation du PVC. Le tri des deux matériau est alors nécessaire mais des traces de PET subsistent dans le PVC dans l'état actuel des possibilités de tri existants. Il est donc nécessaire de pouvoir compatibiliser les résidus de PET avec le PVC sans dégrader celui-ci.

AKOVALI and Coll. compatibilisent des mélanges PVC/PET par solubilisation des deux polymères dans un solvant commun ( mélange phénol/tétrachloroéthane ) et ajout en solution d'un PET modifié par du chlorure de vinyle après irradiation plasma (J.A.P.S. Vol.50 pp. 1747-1752 ( 1993 )). Cette technique est longue, couteuse et nécessite l'usage de solvants délicats à manipuler et à recycler.

On a découvert que les polyesters aliphatiques greffés permettaient une bonne compatibilisation du mélange PVC/PET où le PET est en proportions très faibles (inférieures à 5 %) par passage à l'état fondu dans une extrudeuse usuelle.

On utilise de préférence un greffage par un anhydride d'acide carboxylique insaturé tel que l'anhydride maléique ou un greffage par un produit insaturé portant une fonction epoxydée tel que le méthacrylate de glycidyle (GMA).

L'invention est particulièrement utile pour les mélanges jusqu'à 85/15 (PVC/PET).

On a découvert que les polyesters aliphatiques greffés compatibilisent des polyhalogénures de vinyle et du polystyrène. On entend par polystyrène un homopolymère ou un copolymère du styrène. La quantité de PS dans le mélange peut être majoritaire ou minoritaire.

Les mélanges de l'invention sont par exemple des mélanges PVC/ PS et PVDF / PS.

On utilise de préférence pour ces mélanges des polyesters aliphatiques greffés par du styrène ou ses dérivés. En particulier, l'ε-polycaprolactone modifiée par greffage de styrène permet la compatibilisation des mélanges polyhalogénures de vynile/polystyrène par amélioration de l'adhésion interphasique.

Les mélanges de l'invention peuvent être aussi des mélanges de PVDF avec des polyamides, des polyesters ou de l'EVOH.

Les mélanges PVDF/PA et PVDF/EVOH sont compatibilisés de préférence par (a) un polyester aliphatique greffé par des anhydrides d'acides carboxyliques insaturés ou (b) des polyesters aliphatiques greffés (i) par des anhydrides d'acides carboxyliques insaturés et (ii) par des polyamides monoamines par réaction avec tout ou partie des anhydrides précédents (i).

Les quantités de PVDF et d'EVOH peuvent être quelconques , le PA pouvant être majoritaire ou minoritaire. L'invention concerne avantageusement des mélanges PVDF/EVOH contenant jusqu'à 40 % en poids d'EVOH.

L'invention concerne aussi des mélanges de PVDF et de polyester tel que par exemple le PET ou le PBT.

Les mélanges PVDF/PBT sont compatibilisés de préférence par des polyesters aliphatiques greffés par des produits insaturés portant des fonctions epoxydées. Les proportions de PVDF et de PBT peuvent être quelconques.

L'invention concerne aussi des mélanges PVC/PA compatibilisés de préférence (a) par des polyesters aliphatiques greffés par des anhydrides d'acides carboxyliques insaturés ou par des produits insaturés portant des fonctions epoxydées ou (b) par des polyesters aliphatiques greffés (i) par des anhydrides d'acides carboxyliques insaturés et (ii) par des polyamides monoamines par réaction avec tout ou partie des anhydrides (i) précédents.

On ne sortirait pas du cadre de l'invention en ajoutant aux mélanges des additifs usuels tels que anti UV, anti oxydants, plastifiants.....

### Exemples 1 à 11 (et 1 bis à 11 bis) : GREFFAGE D'ANHYDRIDE MALEIQUE.

Les polycaprolactones utilisées sont de hauts poids moléculaires et de deux types :
- TONE 767E fournie par UNION CARBIDE COMPANY d'indice de fluidité (melt index) de 30 dg/mn mesuré à 190°C sous une charge de 2.16 kg.
- CAPA 680 fournie par SOLVAY INTEROX de masse moléculaires 80000 et d'indice de fluidité de 4.5 dg/mn mesuré à 190°C sous une charge de 2.16 kg.

Le greffage est effectué suivant le protocole général cité dans la description.

L'initiateur utilisé est le DHBP ( LUPEROX 101 ) : les rendements de greffage et les évolutions de viscosité dépendent des teneurs introduites en anhydride maléique ( MAH ) et en DHBP.

L'anhydride maléique greffé est dosé par spectroscopie infra-rouge IRTF sur la bande caractéristique à 1785 cm⁻¹, sur un film de 100µm obtenu sous presse pendant 1mn30 à 180°C, après soustraction du spectre du produit de départ.

L'indice de fluidité ( MI ) est mesuré à 190°C sous une charge de 2.16 kg et exprimé en dg/mn.

| | | | | | | | | | | | |
|---|---|---|---|---|---|---|---|---|---|---|---|
| No exemples | 1 | 2 | 3 | 4 | 5 | 6 | 7 | 8 | 9 | 10 | 11 |
| teneur MAH introduite % | 1.5 | 1.5 | 1.5 | 2 | 2 | 2 | 2 | 2.5 | 2.5 | 2.5 | 2.5 |
| teneur DHBP introduite % | 0.2 | 0.3 | 0.4 | 0.2 | 0.3 | 0.4 | 0.5 | 0.2 | 0.3 | 0.4 | 0.60 |

| Pour PCL TONE 767E: | | | | | | | | | | | |
|---|---|---|---|---|---|---|---|---|---|---|---|
| Ml | 16 | 10.1 | 4.6 | 18.8 | 13.1 | 4.9 | 2.5 | 17.2 | 13.6 | 6.6 | 0.5 |
| % greffé | 0.8 | 0.7 | 0.7 | 0.85 | 1.04 | 1.12 | 1.48 | 1.02 | 0.96 | 1.5 | 1.5 |
| Rendement % | 53 | 46 | 46 | 42.5 | 52 | 56 | 74 | 41 | 38 | 60 | 60 |

| Pour PCL CAPA 680: | | | | | | | | | | | |
|---|---|---|---|---|---|---|---|---|---|---|---|
| No exemples | 1Bis | 2bis | 3bis | 4bis | 5bis | 6bis | 7bis | 8bis | 9bis | 10bis | 11b is |
| Ml | 4.3 | 2.7 | 0.55 | 4.5 | 5.8 | 3.5 | | 4.6 | 5.1 | 4.5 | 1.9 |
| % greffé | 0.67 | 0.92 | 0.93 | 0.65 | 0.84 | 1.03 | | 0.67 | 1 | 0.9 | 1.3 |
| Rendement % | 47 | 61 | 62 | 32.5 | 42 | 51.5 | | 27 | 40 | 35 | 52 |

### Exemples 12 à 21: GREFFAGE DE METHACRYLATE DE GLYCIDYLE.

Nous décrivons l'obtention nouvelle de polycaprolactone greffée par le méthacrylate de glycidyle.

Le greffage est effectué suivant le protocole général sur la PCL TONE P767E.

Le peroxyde utilisé est le DHBP ( LUPEROX 101 ).

Le méthacrylate de glycidyle greffé est dosé en spectroscopie infra-rouge (IRTF) après étalonnage par le monomère sur la bande d'absorption caractéristique à 910 cm⁻¹ sur un film de 100 µm d'épaisseur obtenu sous presse à 190 °C pendant 1 mn 30.

L' indice de fluidité est mesuré comme dans les exemples 1 à 11.

| No exemples | 12 | 13 | 14 | 15 | 16 | 17 | 18 | 19 | 20 | 21 |
|---|---|---|---|---|---|---|---|---|---|---|
| Teneur en GMA introduite % | 1.5 | 1.5 | 1.5 | 2 | 2 | 2 | 2.5 | 2.5 | 2.5 | 2.5 |
| Teneur en DHBP introduite % | 0.2 | 0.3 | 0.4 | 0.2 | 0.3 | 0.4 | 0.2 | 0.3 | 0.4 | 0.6 |
| MI | 24.7 | 17.6 | 12.4 | 24.6 | 21 | 14.1 | 24.3 | 21.9 | 20.3 | 13.1 |
| GMA greffé% | 1 | 0.7 | 0.8 | 0.7 | 0.9 | 1 | 0.6 | 0.8 | 0.9 | 1.2 |
| Rendement % | 67 | 47 | 53 | 35 | 45 | 50 | 24 | 32 | 36 | 48 |

### Exemples 22 à 25 : GREFFAGE DE STYRENE.

Nous décrivons l'obtention nouvelle de polycaprolactones greffés par le styrène.

Le greffage est effectué suivant le protocole général sur la PCL CAPA 680. L'initiateur radicalaire utilisé est le TMCH (1,1-Di(ter-butylperoxy)-3,3,5-trimethylcyclohexane) (LUPEROX 231M50 en solution à 50% dans une huile minérale) ou le DHBP.

Le styrène greffé est dosé en spectroscopie infra-rouge (IRTF) après étalonnage par le monomère sur la bande d'absorption caractéristique à 695 cm⁻¹ sur un film de 100 µm d'épaisseur obtenu sous presse à 190°C pendant 1 mn 30.

L'indice de fluidité est mesuré comme pour les exemples 1 à 11.

| No d'exemples | 22 | 23 | 24 | 25 |
|---|---|---|---|---|
| Teneur en styrène introduite % | 9.5 | 9.5 | 30 | 30 |
| Nature du peroxyde | DHBP | DHBP | TMCH | TMCH |
| Teneur en peroxyde introduite % | 0.55 | 0.95 | 0.12 | 0.375 |
| MI | 11.6 | 5.4 | | |
| Styrène greffé % | 7.6 | 9.4 | 6.3 | 13.5 |
| Rendement % | 80 | 99 | 21 | 45 |

### Exemples E et F : GREFFAGE DE POLYCAPROLACTONE PAR DE L'ANHYDRIDE MALEIQUE PUIS UN OLIGOMERE POLYAMIDE

### Exemple E

Dans le trémie d'une extrudeuse Werner double vis de diamètre 30 mm, on introduit un mélange de granulés constitué de 100 parties de PCL greffée AM de l'exemple 5 et 24,5 parties d'oligomères monoHN2 de PA6 de masse 2500. Le débit est de 15 kg/heure et la température matière aux environs de 200° C. En sortie d'extrudeuse, on obtient après refroidissement un joncs homogène correspondant au greffage des oligomères de PA6 sur le PCL greffée AM.

### Exemple F :

On procède comme dans l'exemple E sauf que l'on remplace la PCL greffée AM de l'exemple 5 par la PCL greffée AM de l'exemple 7. Les proportions sont de 100 parties de PCL greffée AM et 9,25 parties d'oligomère de PA6 monoNH2. Ici également, on obtient après extrusion des granulés d'un matériau homogène.

### Exemple A - MELANGE PVC/EVOH

On a utilisé la polycaprolactone greffée par l'anhydride maléique de l'exemple 9.

Les mélanges PVC/EVOH/PCL modifié ont été réalisés sur extrudeuse bi-vis corotative WERNER 30 avec un profil de températures comme décrit ci-dessous, dans des conditions telles que l'EVOH est fondu sans avoir de dégradation intempestive du PVC.

| Zone d'introduction des polymères | ZONES DE MELANGE | | | Zone de dégazage | | Filière de sortie |
|---|---|---|---|---|---|---|
| 160°C | 180°C | 190°C | 200°C | 180°C | 180°C | 180°C |

Le PVC utilisé est la qualité ELF ATOCHEM S071S (indice de viscosité = 80 (iso 174) valeur K = 57) et l'EVOH est le SOARNOL DT(contenant 29 % molaire de C₂H₄ Mi = 7 dg/mn à 190° C sous 2,16 kg). La quantité d'EVOH est de 10 % et celle de la polycaprolactone modifié variable jusqu'à 5 %. L'action compatibilisante de la PCL modifiée est évaluée comparativement à un PVC grade bouteille (SEB 101 V 261) utilisé (Société VALS) et à un mélange PVC/EVOH (10 %) où le compatibilisant est un polyétheramide (PEA 10 %) de l'art antérieur, comparativement au brevet FR 2634489 dans l'obtention de bouteilles biorientées en évaluant l'aspect de l'objet obtenu suivant le temps de chauffe du thermoformage, technique simulant bien la technique de la biorientation/soufflage classique des bouteilles.

Les conditions opératoires sont les suivantes:
Précalandrage sous forme de film de 400 µm sur calandre Ollier.
Thermoformage sur machine ILLIG:
   Température du four: 500°C
   Temps de chauffe: 17 s puis variable
   vide/refroidissement: 14 s
   pression du vide: repère 5
   vitesse du vide: repère 6
Moule multi-empreintes

| No de l'essai | A1 | A2 | A3 | A4 |
|---|---|---|---|---|
| Produits | SEB 101 V 261 | PVC/EVOH/PE A | PVC/EVOH/PCL modifié à 2.5% d'anhydride maléique | PVC/EVOH/PCL modifié à 5 % d'anhydride maléique |
| Temps de chauffe: 17 s | Correct | Perçage | Correct | Correct |
| Temps de chauffe: 20s | Correct | Formable avec irrégularité d'épaisseur | Formable avec irrégularité d'épaisseur | Correct |
| Aspect du film | Transparent | Laiteux inacceptable | Acceptable | Acceptable |

### Exemple B : MELANGES PVC/PET

Les mélanges ont été fabriqués sur une extrudeuse bi-vis corotative CLEXTRAL avec un profil de vis adapté et un profil de températures suivant:

| Zones d'introduction des granulés de polymères | Zones de mélange | Filière de sortie |
|---|---|---|
| 200°C | 210°C | 170°C |

La vitesse de rotation des vis est de 600 tours par minutes.

Les proportions relatives des polymères sont les suivantes:
- 90 % d'un mélange PVC/PET (95/5) provenant d'une collecte de bouteilles d'eau minérale ( Société SOREPLA )
- 10% d'ε-polycaprolcatone modifié des exemples 9 et 15.

| No des essais | B1 | B2 | B3 |
|---|---|---|---|
| Compatibilisant utilisé | aucun | exemple 9: PCL modifié 0.96 % d'anhydride maléique | exemple 15: PCL modifié 0.7 % de méthacrylate de glycidyle |
| Allongement à la rupture % | 10 | 90 | 120 |
| Résistance à la rupture Mpa | 48 | 24 | 28 |

La diminution de la résistance est simplement un effet de plastification du PVC par la PCL.

### Exemple C : MELANGES PVC /PS et PVDF/PS

Les différents mélanges ont été obtenus sur extrudeuse bi-vis contrarotative du type BRABENDER ZSK ( L/D = 7 ) avec le profil de températures suivant:

| Zones d'alimentation | Zones de mélange | Filière de sortie |
|---|---|---|
| 150°C | 175°C | 185°C |

La vitesse des vitesse est de 50 tours par minute.

Les polymères utilisés sont :
PVC (LUCOREX 2109AO93 ELF ATOCHEM)
PS cristal 1531 ( ELF ATOCHEM ) Lacqrène Mi = 12 dg/mn à 200° C sous 5 kg
PVDF (KYNAR 1000HD ELF ATOCHEM) de Mi = 10 à 250° C sous 10 kg

L'adhésion interphasique est notée de 0 à 3 suivant un degré visuel d'adhésion augmentant. La taille de la dispersion de la phase minoritaire est évaluée également par microscopie électronique à balayage (MEB).

| No exemple | C1 | C2 | C3 | C4 | C5 | C6 | C7 | C8 | C9 |
|---|---|---|---|---|---|---|---|---|---|
| Teneur en PS % | 70 | 63 | 63 | 30 | 27 | 70 | 63 | 30 | 27 |
| Teneur en PVC % | 30 | 27 | 27 | 70 | 63 | | | | |
| Teneur en PVDF % | | | | | | 30 | 27 | 70 | 63 |
| Teneur en PCL non modifié CAPA 680 | | 10 | | | | | | | |
| Teneur en PCL modifié Styrène % (exemple 25) | | | 10 | | 10 | | 10 | | 10 |
| Adhésion interphasique | 1 | 3 | 3 | 2 | 3 | 1 | 3 | 1 | 1 |
| Taille de la phase dispersée | | grossière | fine | | | | | | |

### Exemples G :

- ***MELANGES***: ***PVDF/PBT***
***PVDF/EVOH***
***PVDF/PBT***
***PVDF/PET***
***PVDF/PA***
***PVDF/EVOH***

### 1) Réalisation des alliages en petit malaxeur

On examine les résultats obtenus en petit malaxeur brabender de laboratoire (60 cm³) : ceci pour évaluer l'efficacité des tiers corps (agents compatibilisants) en terme de dispersion et surtout d'adhésion interphasique.

Les tiers corps utilisés sont certaines des PCL greffées correspondant aux exemples décrits ci-dessus (Exemples 5, 7, 14, E et F). L'effet de ces émulgateurs est comparé à celui d'une PCL de base non greffée. La fonctionnalité des PCL greffées utilisées doit bien entendu être ajustée aux groupements réactifs disponibles sur le deuxième polymère que l'on désire associer au PVDF (ou au PVC). Pour les PA, on aura intérêt à choisir une PCL greffée AM ou une PCL greffée AM et polyamide, pour les PBT, on aura à choisir une PCL greffée GMA.

On a évalué l'effet du compatibilisant sur la morphologie par observation en microscopie électronique à balayage (MEB) :

*Adhésion interfaciale :* Observation du faciès de la fracture cryogénique de l'alliage. Présence ou non de particules libres en surface. Contour net ou flou des nodules. Nodules arrachés ou non. Notation de l'adhésion par un chiffre compris entre 1 (mauvaise adhésion) et 3 (excellente adhésion, surface de fracture lisse).

Dans le tableau 1, le PVDF est associé à PA6, PA66, PA11, EVOH, PBT et PET (exemples G1 à G28). Le PVC est associé à PA11 et EVOH (G29 à G36, moins de couples possibles à cause de la dégradation du PVC aux températures de mise en oeuvre des PA6 et PA66 en particulier). Toutes les conditions retenues (compositions, températures etc.) figurent dans ce tableau. Polymère 1, Polymère 2 et tiers corps sont introduits ensembles dans le malaxeur, tournant à 60 tr/mn, pour une durée comprise entre 10 et 15 minutes. On prélève ensuite un échantillon pour observation dans la masse de polymère obtenue après sortie du malaxeur et refroidissement.

Par rapport aux témoins sans tiers corps (ou la morphologie est toujours mauvaise, note 1, exemples G1 et G7), et aux témoins utilisant la PCL de base non greffée (PCL Tone P 767 E, exemples G8, G14, G19 et G33), l'utilisation des PCL greffées conduit dans la plupart des cas à des améliorations très nettes de l'adhésion. Pour les PA et l'EVOH, les meilleurs effets sont obtenus avec les PCL greffées AM et PCL greffées oligomères PA6, pour le PBT c'est avec la PCL greffée GMA.

Démonstration est ainsi faite de l'effet positif des PCL greffées de l'invention.

On utilise le PVDF 9000 HD Mi = 90 à 250° C sous 10 kg et le PVC type SK70 qui a un indice de viscosité 128 (iso 174) et une valeur K de 71.

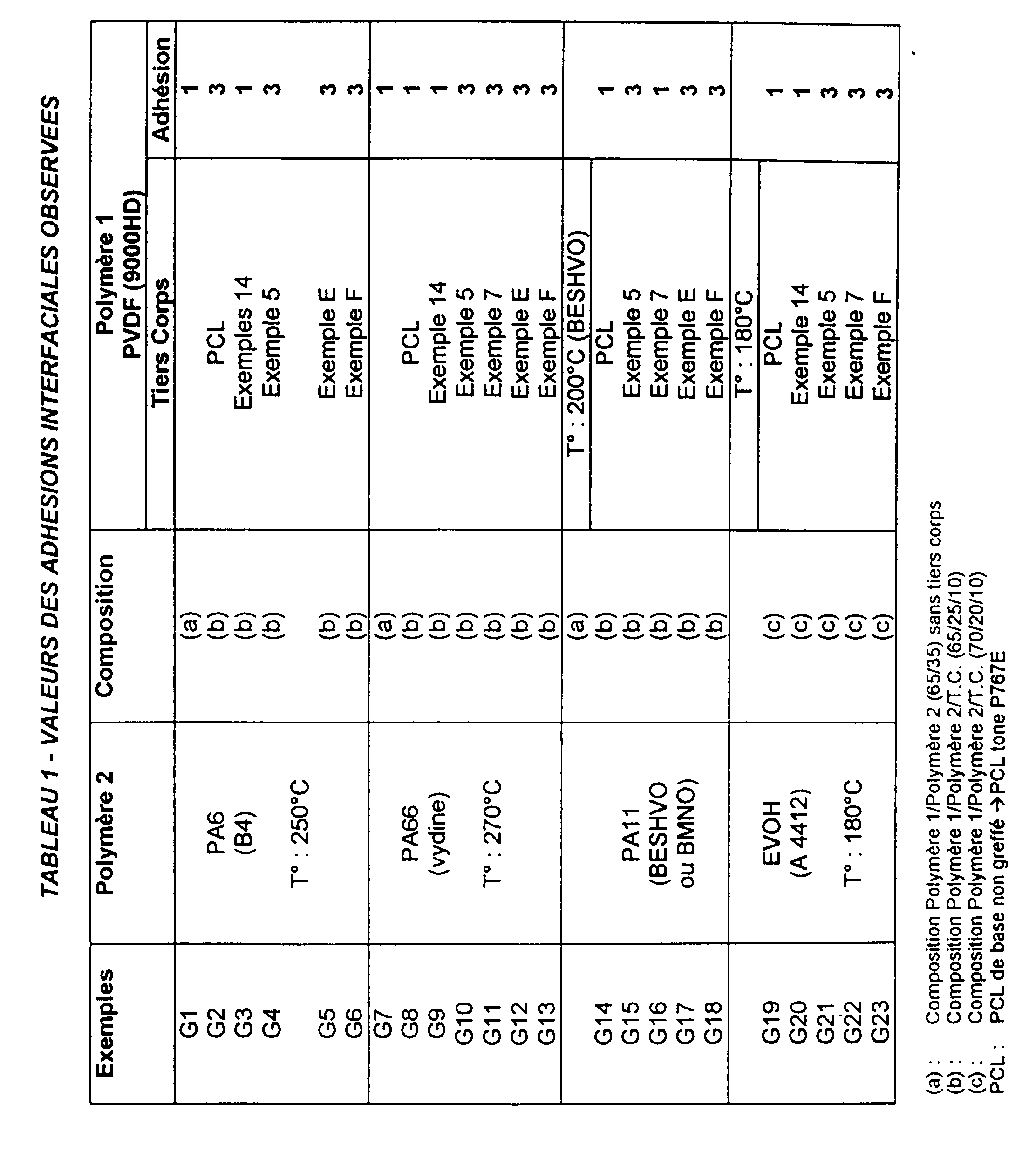

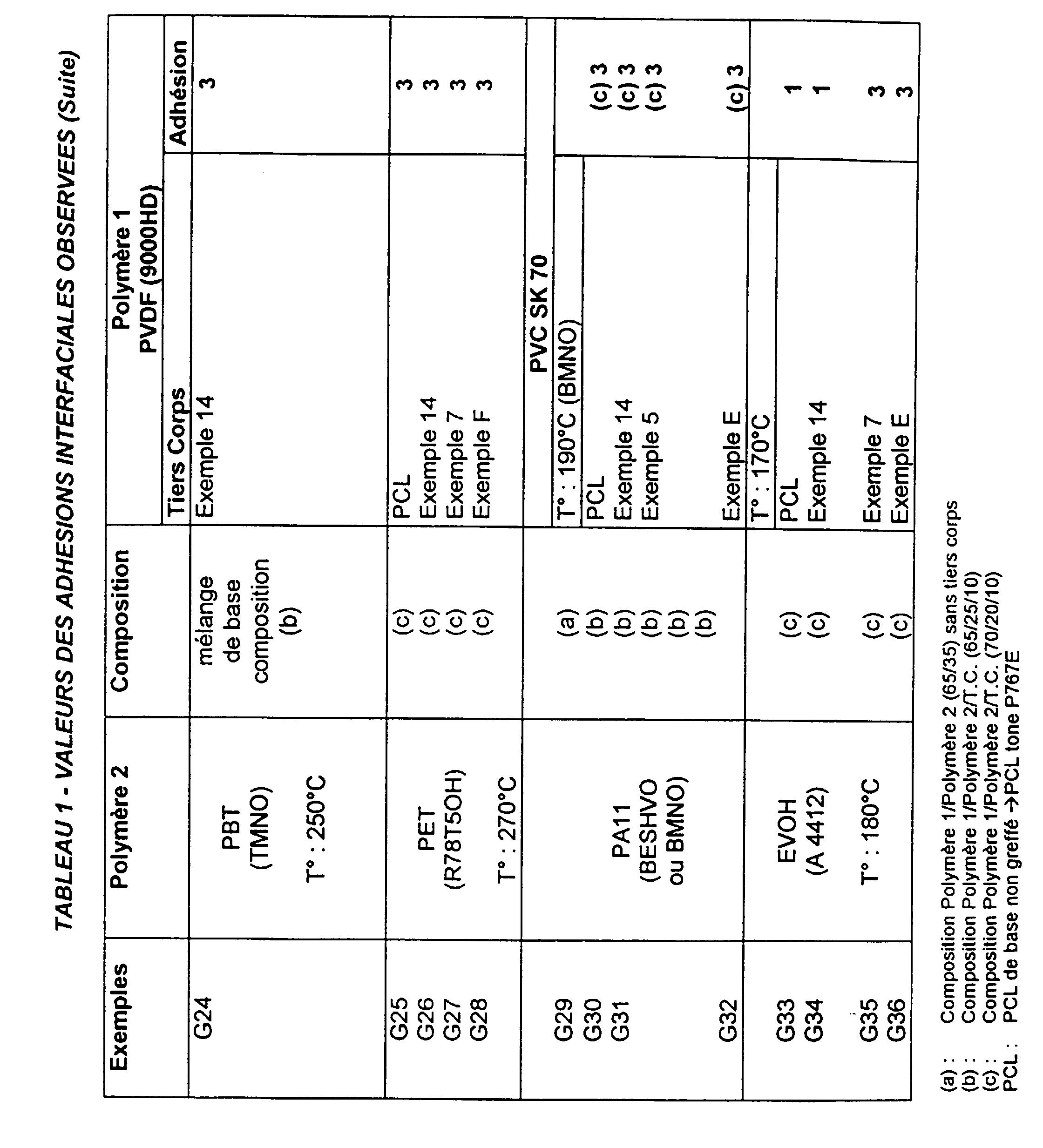

### 2) Réalisation des mélanges sur malaxeur continu BUSS

A l'issue de l'étude préalable sur malaxeur 50 grammes, nous avons choisi les meilleurs couples (adhésion note 3 pour essais malaxeur) afin d'en réaliser une extrapolation sur extrudeuse et pouvoir évaluer les propriétés mécaniques des compounds correspondants. Nous nous sommes cependant limités aux associations pouvant présenter de l'intérêt en terme d'applications et d'un coût raisonnable. L'extrapolation concerne ainsi les alliages PVDF/PA6, PVDF/PA66 et PVDF/PBT.

Le Ko-malaxeur BUSS PR 46 / 70 / 15D permet de travailler en continu. C'est une extrudeuse-malaxeuse pour compoundage équipée de deux trémies d'alimentation (puits 1 et 2), d'un puit de dégazage (puit 3) et d'une filière à joncs 4 trous. A la sortie de la filière, les joncs sont refroidis dans un bac à eau avant granulation. La partie malaxeur se compose d'une vis et d'un corps de malaxage. La rotation de la vis de malaxage est combinée avec un mouvement oscillant le long de l'axe de cette vis. La combinaison de ces deux mouvements et la coopération alternative de doigts de malaxage dans le corps de la vis, ont un excellent effet de mélange. Une vis de reprise (elle même munie d'un puit de dégazage, puit 4), permet de réguler le débit pulsatoire engendré par la partie malaxeur. Sur ce dernier se trouvent des bagues de restriction (B1, B2 et B3) dont nous pouvons ajuster le diamètre pour régler le cisaillement imposé sur la matière. Les conditions opératoires relatives aux exemples décrits plus loin sont regroupées dans le tableau 2.

Pour l'ensemble des exemples, le mélange des granulés (Polymère 1 + Polymère 2 + Tiers corps) est réalisé "au tonneau" puis introduit dans le puit 1 du malaxeur par l'intermédiaire d'un doseur. Le débit est de 30 kg/heure. On applique un léger vide (300 mmHg résiduaire) au puit 3. Les puits 2 et 4 sont fermés. Les bagues B1, B2 et B3 sont respectivement réglées à 33,5 - 35 - 35. Les profils de température matière dépendent des bases utilisées (températures plus élevées quand on associe le PA66).

Les bases utilisées dans nos compositions sont les grades suivants :
PVDF Foraflon 9000 HD et 1000 HD d'Elf Atochem,
PBT TMNO d'Elf Atochem qualité moulage dureté 86 shore D.
PA6 Ultramid B4 de BASF ou RESNO d'Elf Atochem Mi = 3,4 250° C sous 2;16 kg
PA66 Vydyne 21X de Monsanto.

Les compositions des mélanges ainsi que les observations faites sur les joncs en cours de fabrication sont données dans le tableau 3.

En règle générale, quand on granule un jonc correspondant à un simple mélange de polymères incompatibles, ou bien encore un alliage mal compatibilisé (tiers corps inefficace), on obtient des granulés qui délaminent, souvent liés entre eux par des filaments non coupés. Quand on granule un alliage digne de ce nom (morphologie fine, bonne adhésion interphasique), on obtient par contre des granulés parfaits sans délaminage. Cette simple observation qualitative permet donc de juger dès l'extrusion de la qualité de l'alliage. Elle se traduit par un chiffre compris entre 1 et 4 dans le tableau 3 (colonne granulation).

On peut juger également de la cohésion du matériau en pratiquant une petite entaille dans le jonc puis en étirant celui-ci dans le sens de son axe. En principe, si la cohésion est bonne on obtient une déformation homogène du joncs. Par contre si celle-ci est mauvaise, il y a délaminage et fibrillation du jonc. Cette caractéristique est également mentionnée dans le tableau 3.

*Morphologie :* Observation de l'échantillon après rabotage à froid et extraction sélective de la phase dispersée (solvant). Renseignements sur le type de morphologie (nodulaire ou co-continue), et la qualité de la dispersion (taille moyenne des particules, homogénéité).

On procède à une observation de la morphologie par microscopie électronique. Adhésion et diamètre nodulaire moyen en nombre sont également donnés dans le tableau 3 pour certains exemples.

Il existe en fait une corrélation directe entre Granulation, Cohésion du jonc, Adhésion et Morphologie. Dès lors que l'on introduit un tiers corps efficace dans le mélange, ces caractéristiques sont très nettement améliorées. Granulation, Cohésion du jonc et Morphologies ne sont pas bonnes pour les témoins sans tiers corps (témoins 1, 2 et 3) ainsi que pour les témoins utilisant la PCL de base non greffée (exemples 57405, 57408, 57409 et 57415). L'introduction de PCL greffée AM ou bien oligomères de PA6 dans PVDF/PA6 et PVDF/PA66 conduit à de bonnes caractéristiques. Dans le cas de PVDF/PBT, même si les PCL greffées AM et oligomères de PA6 donnent des résultats satisfaisants en Granulation (exemples 57415 à 57419), il faut utiliser des PCL greffées GMA pour obtenir simultanément bonne Granulation, Cohésion, Adhésion et Dispersion (exemples 57420, 420 bis, 421 et 422).

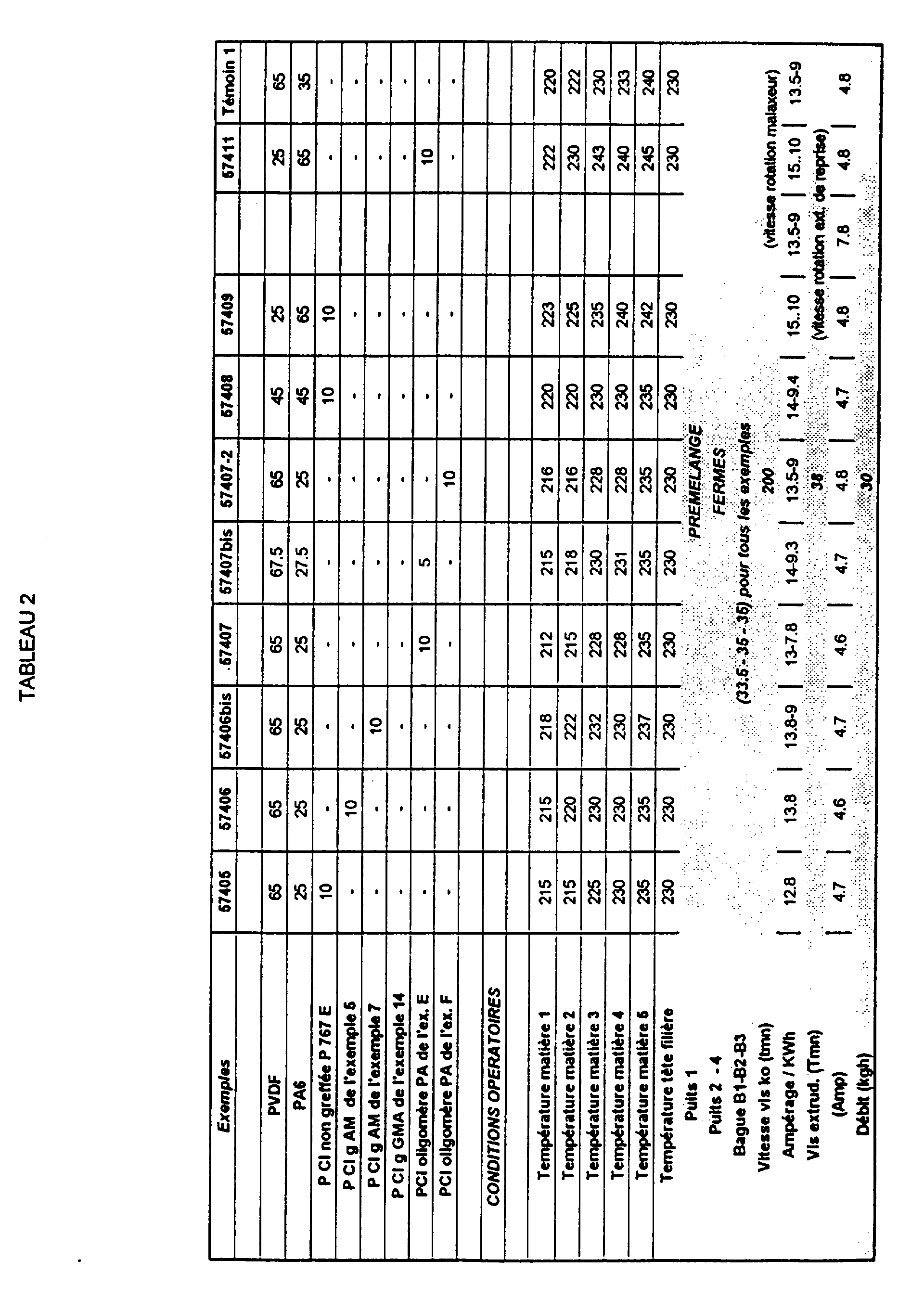

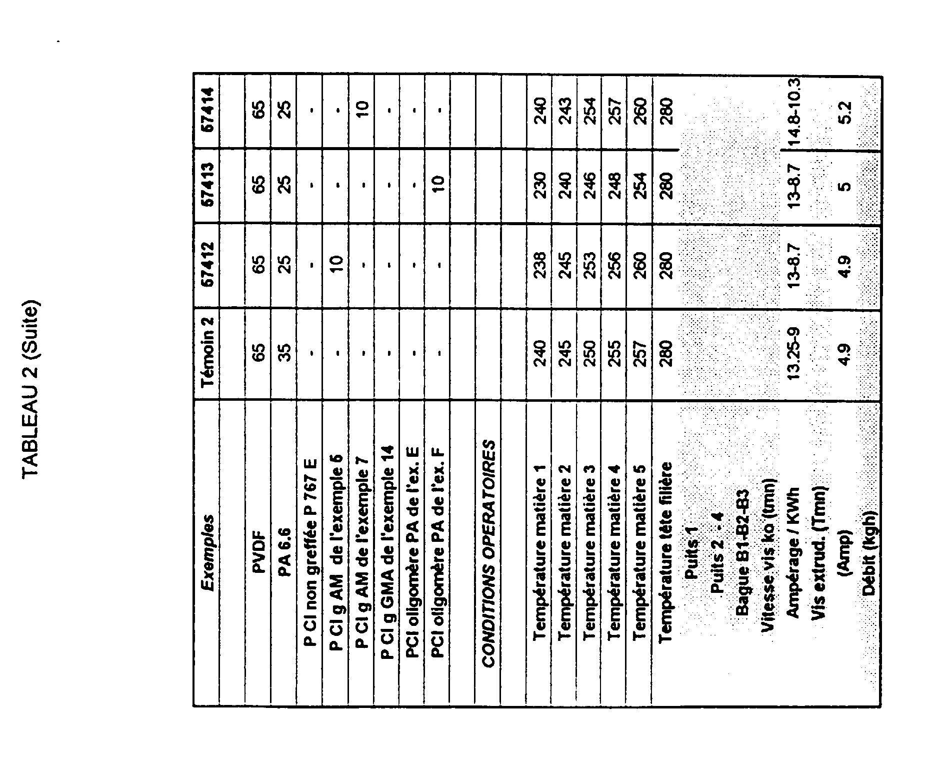

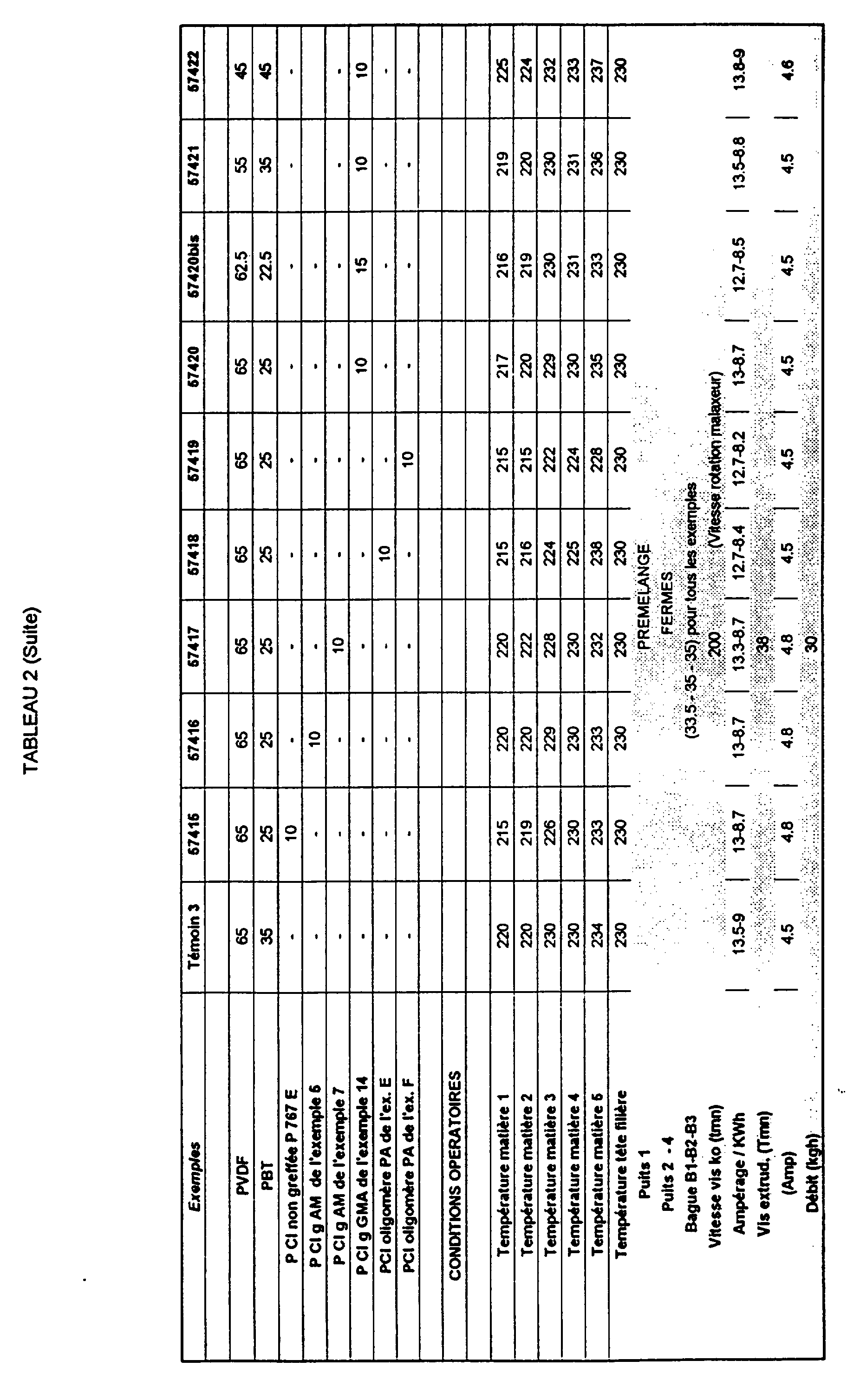

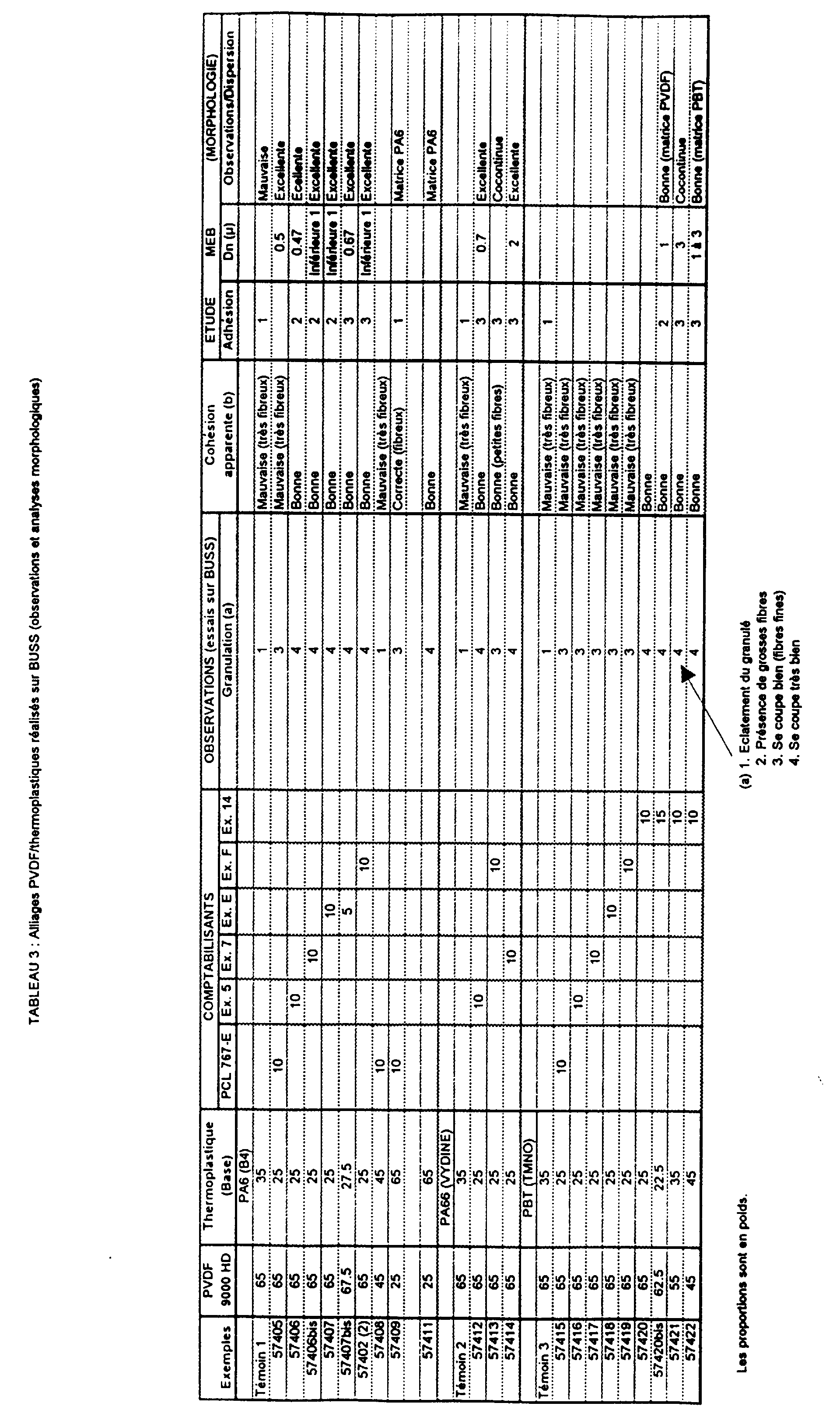

### 3) Evaluation des propriétés mécaniques des mélanges.

Certains des exemples ci-dessus et des témoins ont été injectés pour obtenir des éprouvettes de type haltères ISO R 527 (Pour les conditions d'injection, voir le tableau 4). L'usinage de certaines haltères permet de les transformer en barreaux 80∗10∗4, pour détermination du module de flexion (ISO 178), de la résistance aux chocs (Charpy ISO 179 et IZOD ISO 180) et du point Vicat (ISO 306).

Un test qualitatif de pliage des éprouvettes, réalisé manuellement au pied de la machine, permet d'avoir une première idée de la résistance de ces produits. En règle générale, les témoins sans tiers corps résistent mal à la pliure alors que les alliages compatibilisés supportent très bien ce test (Voir tableau 4).

Dans le tableau 5, sont données les caractéristiques mécaniques. Pour le couple PVDF 9000 / PA6 (exemples 57406, 407, 409 et 411), les meilleurs résultats sont obtenus avec une PCL greffée AM (exemple 5 utilisé dans l'exemple 57406) et une PCL greffée oligomères de PA6 (exemple E utilisé dans l'exemple 57407). Pour ces deux exemples, non seulement on avoisine les valeurs de charge et d'allongement à la rupture du PVDF 9000 mais on améliore la résistance aux chocs comparativement au témoin 1 sans tiers corps.

Alors que l'essai témoin du couple PVDF 9000 / PA66 est très fragile (casse à la pliure des éprouvettes du témoin 2), on arrive à obtenir avec l'ajout de 10% de PCL greffée AM (de l'exemple 5), um matériau final doté de bonnes caractéristiques à la rupture et de meilleure résistance aux chocs que le PVDF (exemple 57412 / témoin 2).

Enfin, pour le couple PVDF 9000 / PBT, l'utilisation de PCL greffée GMA (de l'exemple 14), permet par rapport à l'essai témoin (témoin 3), d'améliorer de façon notable l'allongement à la rupture et la résistance aux chocs des alliages (exemples 57420 et 57420 bis / témoin 3).

On a réalisé une deuxième série d'exemples sur Buss en utilisant le PVDF 1000 HD de masse moléculaire plus élevée ( par rapport au 9000 HD), et donc de meilleures propriétés intrinsèques. L'inconvénient du 1000 HD est qu'il est nettement plus visqueux que le 9000 HD et donc moins favorable à l'obtention d'une matrice PVDF. Les propriétés des exemples ainsi réalisés (PVDF 1000 HD + PA6 ou PA66, voir tableau 6), sont comparés aux mêmes témoins 1 et 2 sans tiers corps et aux exemples avec PVDF 9000 HD.

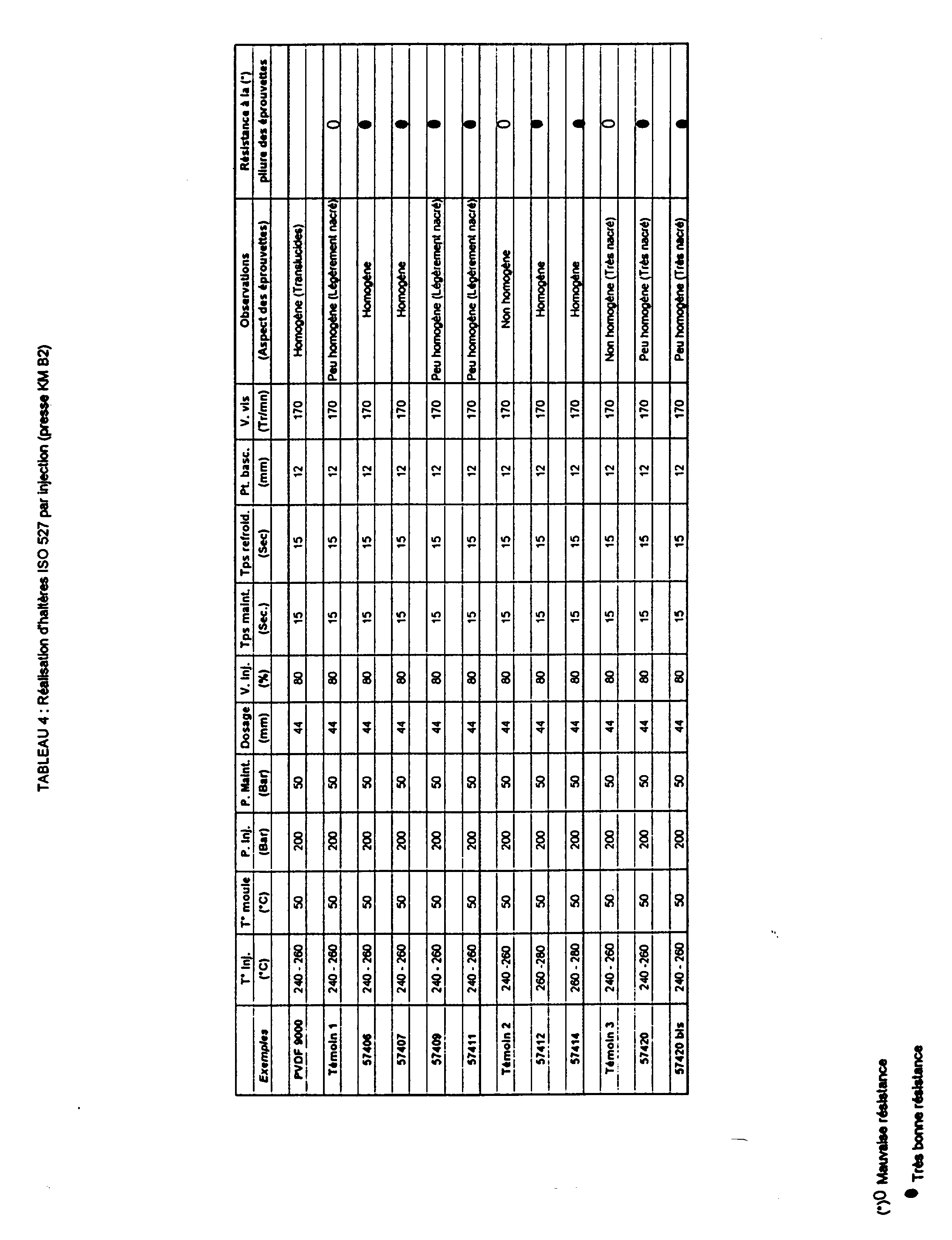

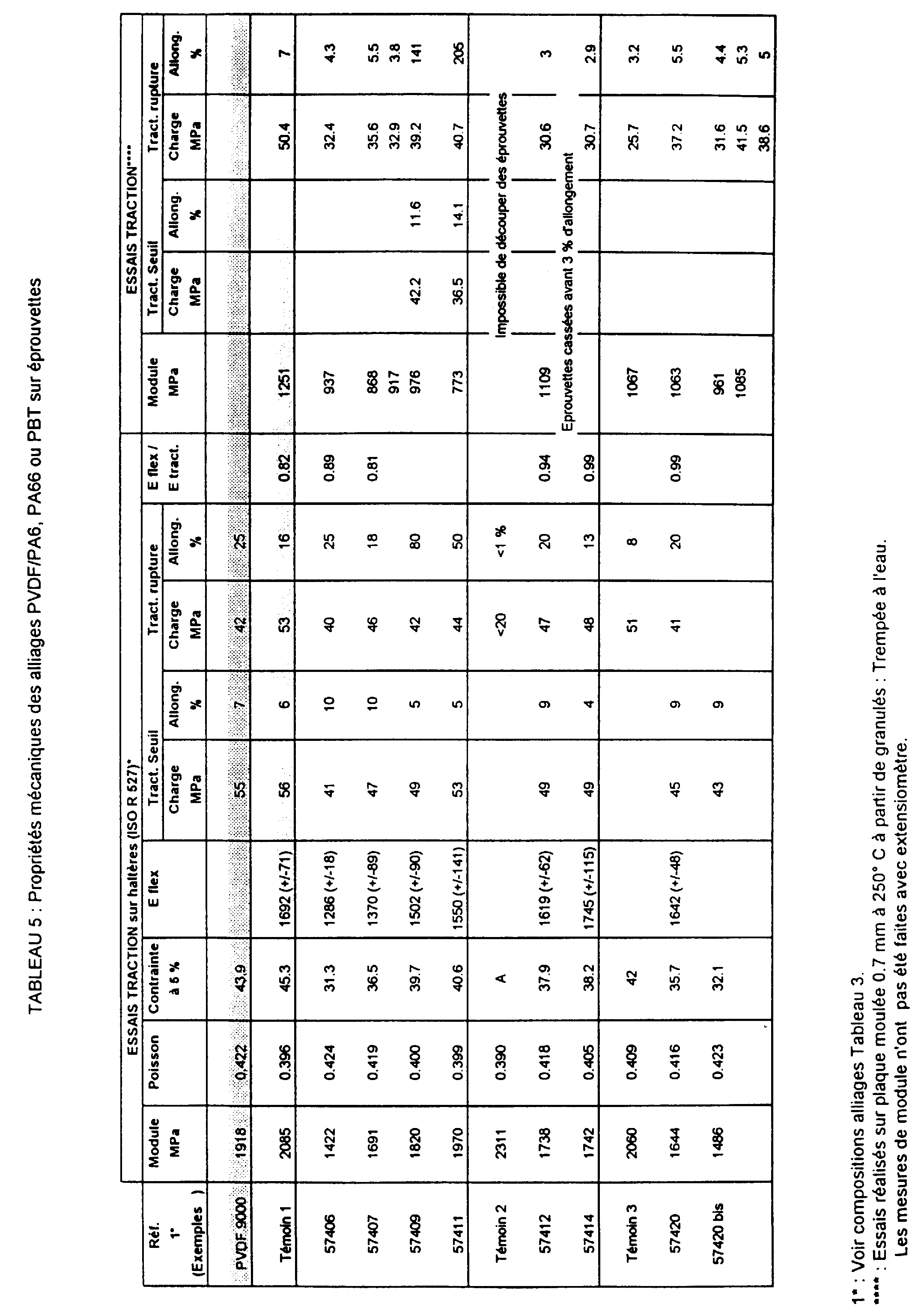

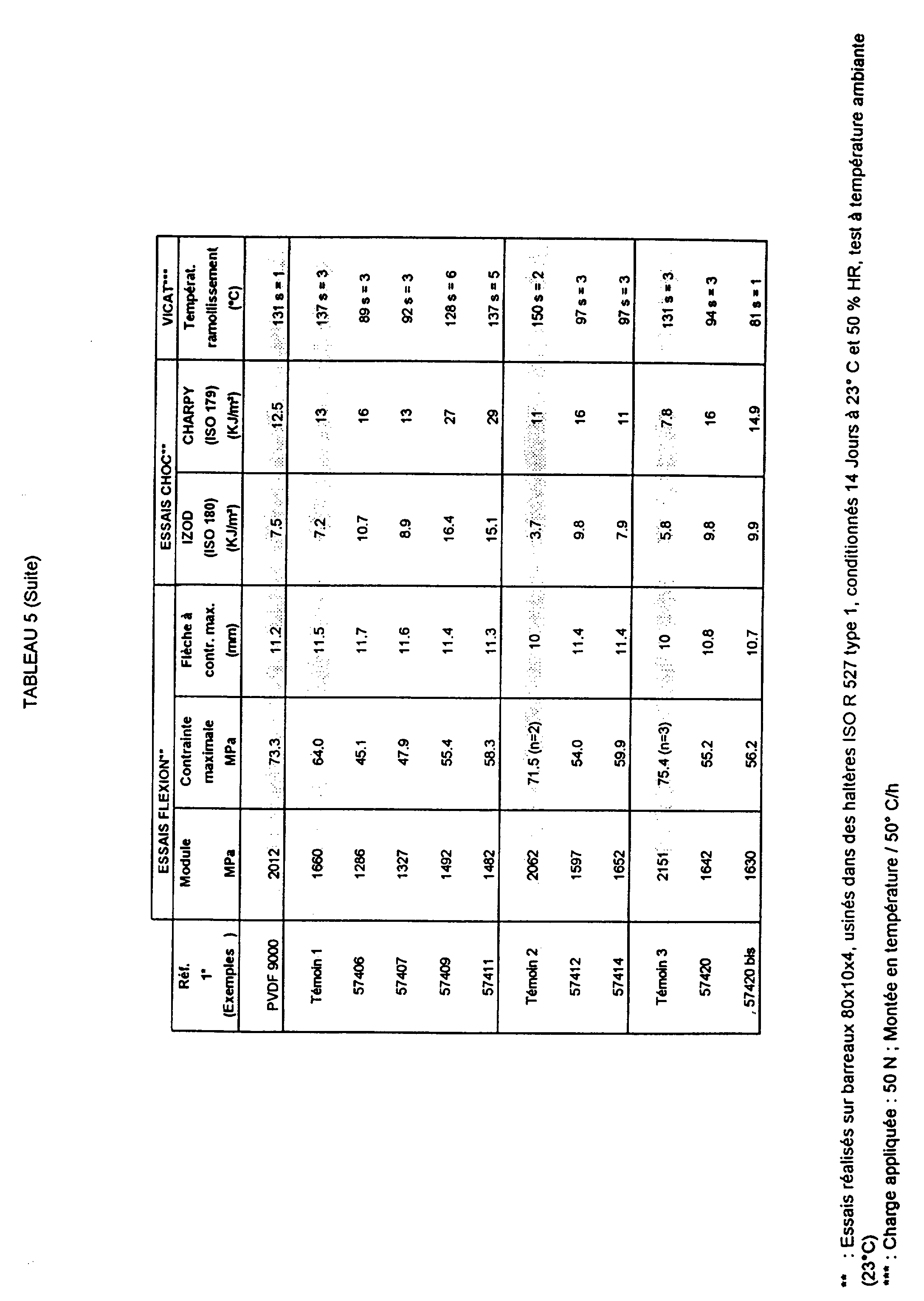

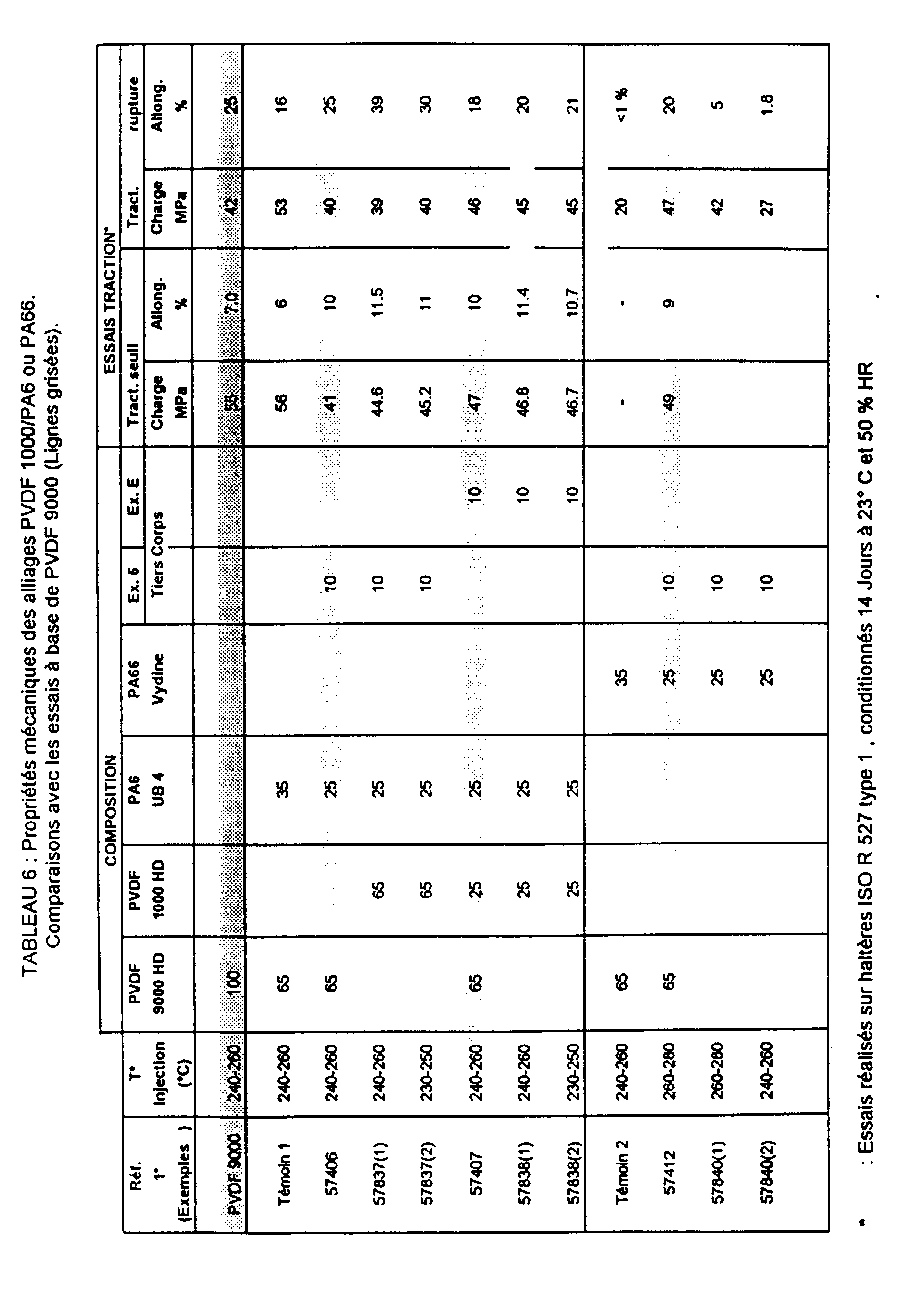

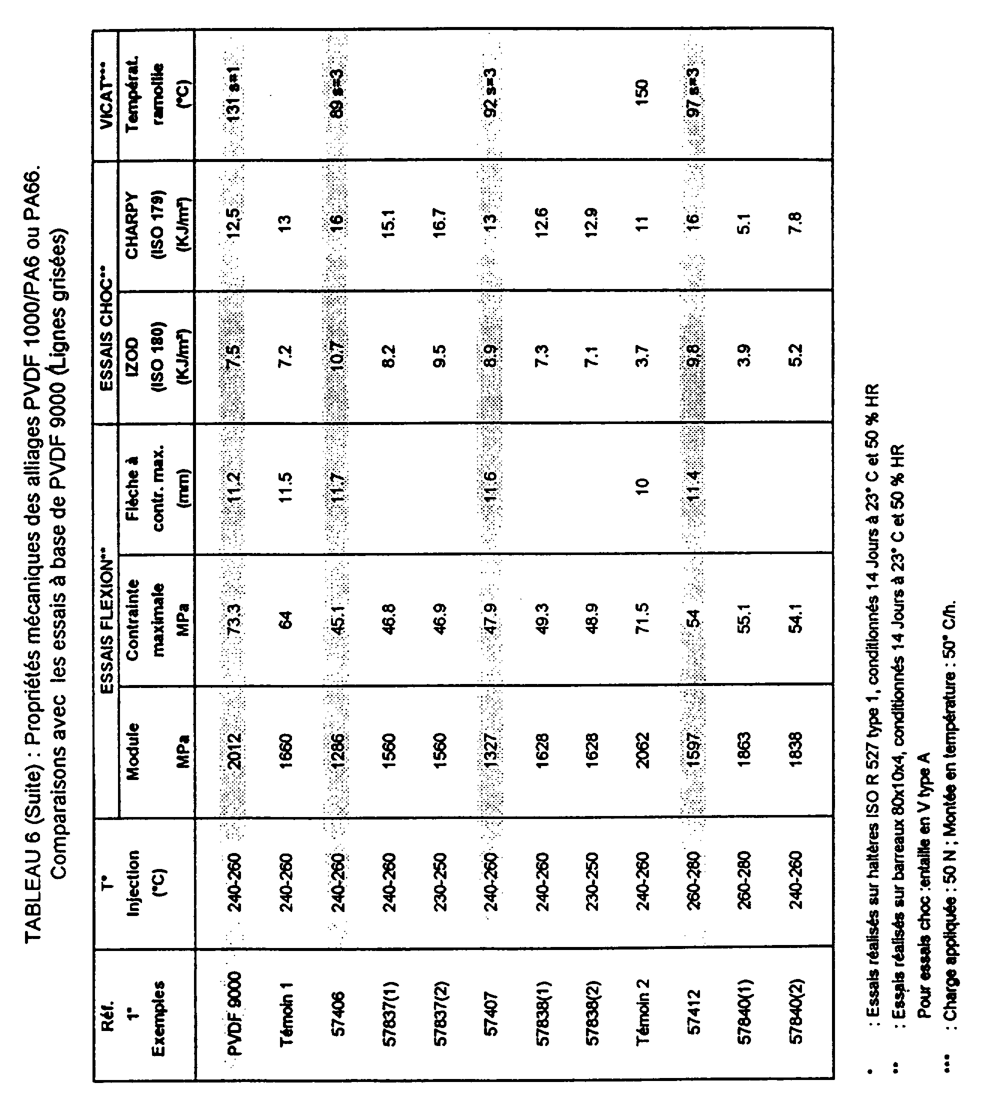

## Revendications

1. Mélanges comprenant :
- un polymère halogéné,
- un autre polymère choisi parmi l'EVOH, le PBT, le PET, le PS ou le PA.
- un compatibilisant constitué d'un polyester aliphatique sur lequel on a greffé au moins un monomère choisi parmi :
- les acides carboxyliques insaturés, leurs sels, leurs esters, leurs anhydrides ;
- les produits insaturés portant des fonctions époxydées ;
- les esters vinyliques ;
- le styrène et ses dérivés..
la quantité de monomère greffé étant inférieure à 15% en poids du polyester aliphatique.

2. Mélanges selon la revendication 1 dans lesquels le polymère halogéné est choisi parmi le PVC, le PVC surchloré, le PVC plastifié, les compounds à base de PVC, le PVDF et ses copolymères ou le PVF3.

3. Mélanges selon l'une des revendications 1 ou 2 dans lequels le polyester est la polycaprolactone.

4. Polyesters aliphatiques greffés par des produits insaturés portant des fonctions epoxydées.

5. Polyesters aliphatiques greffés (i) par un monomère X pouvant réagir avec un motif amine, et (ii) par des polyamides monoaminés qui ont réagi avec tout ou partie des monomères X.

6. Produits selon la revendication 5 dans lesquels le monomère X est choisi parmi les acides carboxyliques insaturés et les anhydrides d'acides carboxyliques insaturés.

7. Mélanges de polymères comprenant au moins un polymère halogéné et compatibilisés par un polyester aliphatique greffé selon la revendication 5 ou 6.

8. Mélanges selon la revendication 7 dans lesquels (i) le polymère halogène est choisi parmi le PVC, le PVC surchloré, le PVC plastifié, les compounds à base de PVC, le PVDF ou ses copolymères ou le PVF3 et (ii) qui comprennent un autre polymère choisi parmi l'EVOH, le PBT, le PET, le PS ou le PA.

## Patentansprüche

1. Gemische, die folgende Bestandteile enthalten:
- ein halogenhaltiges Polymer,
- ein weiteres Polymer, das unter EVOH, PBT, PET, PS und PA ausgewählt ist,
und
- einen Kompatibilitätsvermittler, der aus einem aliphatischen Polyester besteht, der mit mindestens einem Monomer gepfropft ist, welches unter folgenden Monomeren ausgewählt ist:
· ungesättigten Carbonsäuren sowie deren Salzen, Estern und Anhydriden,
· ungesättigten Verbindungen mit Epoxidgruppen,
· Vinylestern und
· Styrol und seinen Derivaten,
wobei der Mengenanteil des gepfropften Monomers weniger als 15 Gew.-%, bezogen auf den aliphatischen Ester, beträgt.

2. Gemische nach Anspruch 1, in denen das halogenhaltige Polymer unter PVC, nachchloriertem PVC, plastifiziertem PVC, Compounds auf PVC-Basis, PVDF sowie seinen Copolymeren und PVF₃ ausgewählt ist.

3. Gemische nach Anspruch 1 oder 2, in denen der Polyester Polycaprolacton ist.

4. Aliphatische Polyester, die mit ungesättigten Verbindungen gepfropft sind, welche Epoxidgruppen aufweisen.

5. Aliphatische Polyester, die
(i) mit einem Monomer X, das mit einer Amino-Einheit reagieren kann,
und
(ii) mit Polyamiden, die eine Monoamin-Gruppe aufweisen und die mit allen Monomeren X oder einem Teil davon reagiert haben,
gepfropft sind.

6. Produkte nach Anspruch 5, in denen das Monomer X unter ungesättigten Carbonsäuren und den Anhydriden ungesättigter Carbonsäuren ausgewählt ist.

7. Polymergemische, die mindestens ein halogenhaltiges Polymer und einen gepfropften aliphatischen Polyester nach Anspruch 5 oder 6 als Kompatibilitätsvermittler enthalten.

8. Gemische nach Anspruch 7, wobei
(i) das halogenhaltige Polymer unter PVC, nachchloriertem PVC, plastifiziertem PVC, Compounds auf PVC-Basis, PVDF sowie seinen Copolymeren und PVF₃ ausgewählt ist und
(ii) diese Gemische ein weiteres Polymer enthalten, das unter EVOH, PBT, PET, PS undPA ausgewählt ist.

## Claims

1. Mixtures including
- a halogen-containing polymer,
- another polymer chosen from EVOH, PBT, PET, PS and PA,
- a compatibilizer consisting of an aliphatic polyester, on to which has been grafted at least one monomer chosen from:
- unsaturated carboxylic acids, their salts, their esters and their anhydrides,
- unsaturated products carrying epoxidized functional groups,
- vinyl esters
- styrene and its derivatives,
the amount of grafted monomer being less than 15% by weight of the aliphatic polyester.

2. Mixtures according to Claim 1, in which the halogen-containing polymer is chosen from PVC, chlorinated PVC, plasticized PVC, PVC-based compounds, PVDF and its copolymers or PVF3.

3. Mixtures according to either of Claims 1 and 2, in which the polyester is polycaprolactone.

4. Aliphatic polyesters grafted with unsaturated products carrying epoxidized functional groups.

5. Aliphatic polyesters grafted (i) with a monomer X which is capable of reacting with an amine unit, and (ii) with monoamine polyamides which have reacted with all or part of the monomers X.

6. Products according to Claim 5, in which the monomer X is chosen from unsaturated carboxylic acids and the anhydrides of unsaturated carboxylic acids.

7. Mixtures of polymers including at least one halogen-containing polymer and compatibilized with a grafted aliphatic polyester according to Claim 5 or 6.

8. Mixtures according to Claim 7, in which (i) the halogen-containing polymer is chosen from PVC, chlorinated PVC, plasticized PVC, PVC-based compounds, PVDF or its copolymers or PVF3 and (ii) which include another polymer chosen from EVOH, PBT, PET, PS and PA.
